# EUROPEAN PATENT APPLICATION

(11) **EP 2 357 596 A1**
(43) Date of publication of application: **17.08.2011**
(21) Application number: 10152021.1
(22) Date of filing: 28.01.2010
(51) Int. Cl.: G06Q 20/00, G06F 17/21, G06F 21/00

(54) **Secure online order confirmation method**

(71) Applicant: Psylock GmbH, 93053 Regensburg (DE)
(72) Inventor: Dr. Wagenhofer, Markus, 93128, Regenstauf (DE); Beer, Andreas, 92540, Altendorf (DE); Erdenreich, Sebastian, 85283, Wolnzach (DE); Schenkl, Johann, 92439, Bodenwöhr (DE)
(74) Representative: Lang, Christian

(57) **Abstract**

The present invention refers to a method for secure confirmation of an order sent by electronic communication between remote computers, with the method comprising:
establishing a data connection for transferring data between at least two computers,
transferring data comprising an order between the computers,
confirming the order by sending confirmation data, wherein the confirmation data comprise information on the keystroke dynamics measured during inputting of at least one of the order and the confirmation data.

## Description

### BACKGROUND OF THE INVENTION

### FIELD OF THE INVENTION

The present invention refers to a method for secure confirmation of an order sent by electronic communication between remote computers as well as a computer program product using such a method.

### PRIOR ART

E-commerce and online business are rapidly increasing, since fast internet access is available for more and more people. However, such new communication methods also lead to new possibilities of imposters to deceive and badly damage users of the new communication technologies. For example, online banking is very popular due to simple access to the account at nearly all the time. However, due to security lacks imposters may have the chance to illegally transfer money from the account. In this respect phishing attacks for obtaining security data, like personal identification numbers and transaction numbers are unfortunately also widely spread as online banking itself.

Although a lot of measures have already been suggested and realized in order to increase security of online banking and online business in general, there is still need for improvement. For example, use of indexed transaction numbers or mobile transaction numbers have increased security in online banking. However, such methods may further be improved with respect to security. In addition, some of the methods are not very comfortable for the users and therefore acceptance of such methods may be limited.

### DISCLOSURE OF THE INVENTION

### OBJECT OF THE INVENTION

Accordingly, it is an object of the present invention to provide a method for improving security of e-commerce and especially online banking, while at the same time comfort for the user is not negatively affected. Moreover, the method should be simple, both in use and implementation.

### TECHNICAL SOLUTION

The above-mentioned object is achievd by a method having the features according to claim 1 as well as a computer program product having the features of claim 8. Moreover, advantageous embodiments are subject-matter of the dependent claims.

According to the present invention online business and especially online banking and more particularly the confirmation of an order sent by electronic communication between remote computers may be rendered more secure by using key stroke dynamics measured during inputting of at least one of the order and of confirmation data for confirming the order. Since key stroke dynamics are characteristic for each single person and are automatically generated by any input via the keyboard such a method is simple to use and does not impede the comfort of the user.

The method for secure confirmation of an order according to the present invention may be used with all known confirmation methods used in online business. However, the key stroke dynamics may also be used solely for generating the confirmation data.

For example, typing of the order may be used to produce key stroke dynamics data by recording the key stroke data and/or processing characteristic parameters describing the key stroke dynamics of the user from the raw data recorded during typing of the order. Such information, namely the key stroke dynamics data comprising the raw typing data and/or the processed key stroke dynamics data may be sent to the remote computer to which the order has been sent for confirmation of the order.

Instead of using the order data or additionally to the order data input confirmation data may be used for generating key stroke dynamics data. In this respect all known input confirmation data like transaction numbers (TAN), indexed transaction numbers (iTAN), individually generated transaction numbers by transaction number generators, mobile transaction numbers (mTAN) etc. may be used.

Moreover, it is possible to use solely or in addition to other input data predetermined or predefined text or string to be typed by the user or user defined arbitrary string or text for generating key stroke dynamics data.

The confirmation data comprising the key stroke dynamics data are sent to the remote computer, like a data processing center or a server of a bank or the like, to which the order is transmitted, and the recipient of the confirmation data may determine on the basis of key stroke dynamics data stored for every user whether the confirmation data are correct and/or can be allocated to a registered user.

Determination of correctness of the confirmation data and consequently of the order confirmed by the confirmation data can be carried out by a simple comparison of the key stroke dynamics data received together with the confirmation data and of the data stored for the single user and/or by statistically processing of such key stroke dynamics data.

The key stroke dynamics data comprised in the confirmation data may be raw input data and/or processed key stroke dynamics data. Accordingly, the raw input data may be processed at the recipient computer and/or at the computer of the user, in order to generate processed key stroke dynamics data comprising characteristic features or parameters of the typing behaviour.

Such characteristic features or parameters of the typing behaviour may include holding times of the keys, change over times from releasing one key to pressing the next key, change over times from releasing one key to releasing the next key, change over times from pressing one key to pressing the next key etc. Such time values may be average values for all keys or specific values for a specific key. Moreover, fault frequency, fault occurrence, typing frequency, stroke frequency, single overrunning, multiple overrunning, frequency of use of specific keys, selection of alternative keys, selection of left and right shift keys, and anomalies with respect to time or specific keys, position related features, combinations thereof and statistic parameters out of these data may be used for describing key stroke dynamics or typing behaviour of a user.

Moreover, additional data input during processing of an order, like typing of personal identification numbers or something like that, may also be used for generating key stroke dynamics data.

### SHORT DESCRIPTION OF THE FIGURES

Further characteristics, advantages and features of the present invention will become apparent from the following description. The accompanying drawings show in a pure schematic way in
- Fig. 1: a schematic representation of two computers using the present invention;
- Fig. 2: a plain view of the screen of a monitor displaying several components used by the present invention; and in
- Fig. 3: a schematic representation of a data block provided by the present invention.

### DESCRIPTION OF AN EMBODIMENT

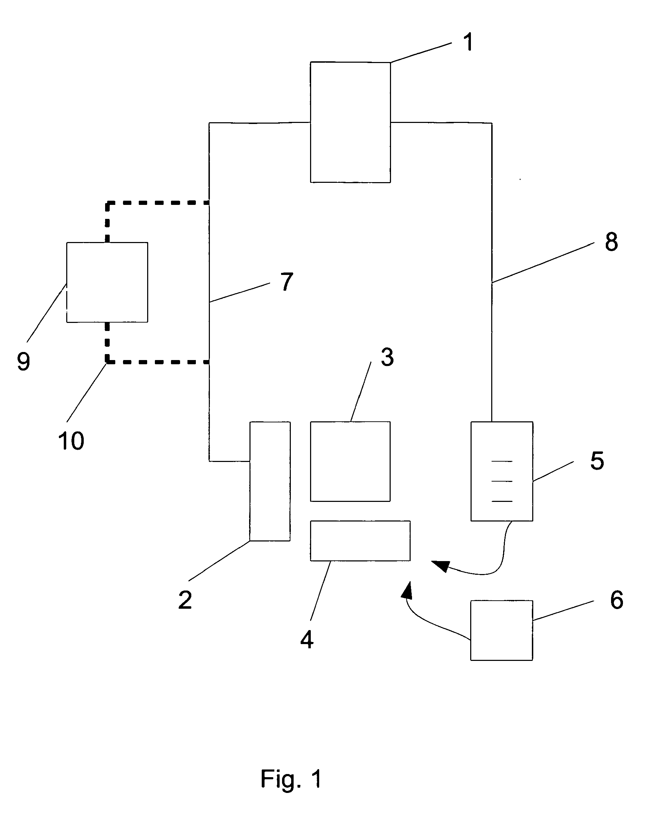

Fig. 1 shows a schematic representation of two computers using the present invention. While Fig. 1 only shows two computers, it is evident for a man skilled in the art that a network of a plurality of computers, like the internet, may be used for performing the present invention.

In the embodiment shown in Fig. 1 computer 1 may be a server of a bank which provides online services for the client via the internet. Accordingly, a user having a personal computer or a laptop 2 with a monitor and a keyboard may establish a connection 7 to the server of the bank for exchanging data. For example, the user may carry out wire transfer of money through the bank and send an appropriate order to the server 1 of the bank.

Normally, such an order has to be carried out in a specific way, in order to avoid unauthorized transfers from the account of the bank client. According to prior art, the bank client has to apply for access to his online account by transferring data regarding the account number and personal identification number PIN to the server 1 of the bank. If the server 1 of the bank determines that the transferred data from the client are correct, the server allows access to the online account. Then the bank client may carry out orders, like wire transfer of money to another bank or account. In order to confirm such orders, the bank client has to transfer additional data, namely confirmation data in form of a transaction number (TAN) provided by the bank. If the transaction number is correct, the bank will carry out the order.

However, it is also known that some people try to deceive and to illegally transfer money from bank accounts. For this purpose, imposters try to obtain information about the personal identification number and the transaction numbers. In this respect phishing attacks are well known by which such information may be derived from the bank clients. Another risk is the so-called man-in-the-middle-attack which is also shown in Fig. 1. According to this attack the imposter tries to trespass into the communication between the user and the server of the bank. The interruption of the communication line 7 between the server 1 of the bank and the computer 2 of the user is shown as the bypass 10 with a computer 9 of the imposter in the middle. During the man-in-the-middle-attack the imposter simulates for the client to be the server of the bank and vice versa.

According to the present invention, the security of online orders, like bank transfers or the like, can be increased by using key stroke dynamics to establish confirmation data or improve such confirmation data by adding key stroke dynamics data. Accordingly, the present invention can be carried out with all known security methods for secure online orders or transfers. However, the present invention may also be used solely without any additional security measure.

For example, the simplest case is given by a confirmation of an order by transmitting predetermined text as confirmation. In this case, the order may be simply signed by inputting a text, like the signature of a person. According to the present invention, the key stroke dynamics are recorded or measured during input of the predetermined text or string, like the signature. The key stroke dynamics are characteristic for each single person so that the server 1 receiving the confirmation data including the predetermined text or string as well as the key stroke dynamic data can determine whether the confirmation data can be allocated to a specific person. For this purpose data on the key stroke dynamics or the typing behaviour of a client are stored at the server of the bank.

In other embodiments the text or string to be typed by the user may be user defined so that the user can input any arbitrary text or string. Accordingly, the confirmation data are only constituted by the key stroke dynamics data, since the server 1 of the bank receiving the confirmation data does not know what kind of text or string has been inputted by the user. However, again stored data on the key stroke dynamics or typing behaviour of the user may be utilized to define whether the confirmation data can be allocated to the user.

Moreover, the text or string to be typed for establishing the key stroke dynamics data can be defined in any suitable way. For example, transaction numbers (TAN), indexed transaction numbers (iTAN) or individually generated transaction numbers may be used as a basis for establishing the key stroke dynamics data. The different methods for generating transaction numbers like the method for providing indexed transaction numbers or transaction numbers generated by separate electronic devices are well known in prior art and may not be explained in detail.

For example, mobile transaction numbers may also be used. Such mobile transaction numbers are generated on request by the server 1 of the bank and transmitted to the client via a second communication line 8, for example by wireless communication lines via mobile phones. At the mobile phone 5 or any suitable device the individually generated transaction number, i. e. in this case the mobile transaction number, is displayed and the user has to input this mobile transaction number via the keyboard 4 into the computer 2 which sends this input confirmation data to the server 1 of the bank for confirming the order. According to the present invention the confirmation data comprising the mobile transaction number additionally comprises the key stroke dynamics data obtained during typing of the mobile transaction number.

In the same way individually generated transaction numbers generated for example by a transaction number generator 6, which may include a time signal into the generated transaction number, may also be used.

A further embodiment may use so-called CAPTCHA messages sent by the server 1 to the computer 2 of the user for confirming an order. Such CAPTCHA (Completely Automated Public Turing test to tell Computers and Humans Apart) are used to avoid that computer programs are used to answer requests of the server 1. Such CAPTCHA messages are difficult to read for a machine and therefore it is necessary that a human being is typing the CAPTCHA message into the keyboard. This again may be used for establishing key stroke dynamics data which may be attached or solely used for constituting the confirmation data sent to the server 1 of the bank.

In a further embodiment typing of the order may also be used for establishing key stroke dynamics data. Accordingly, such key stroke dynamics data produced during typing of the order may solely and/or in addition to other confirmation data used as confirmation data.

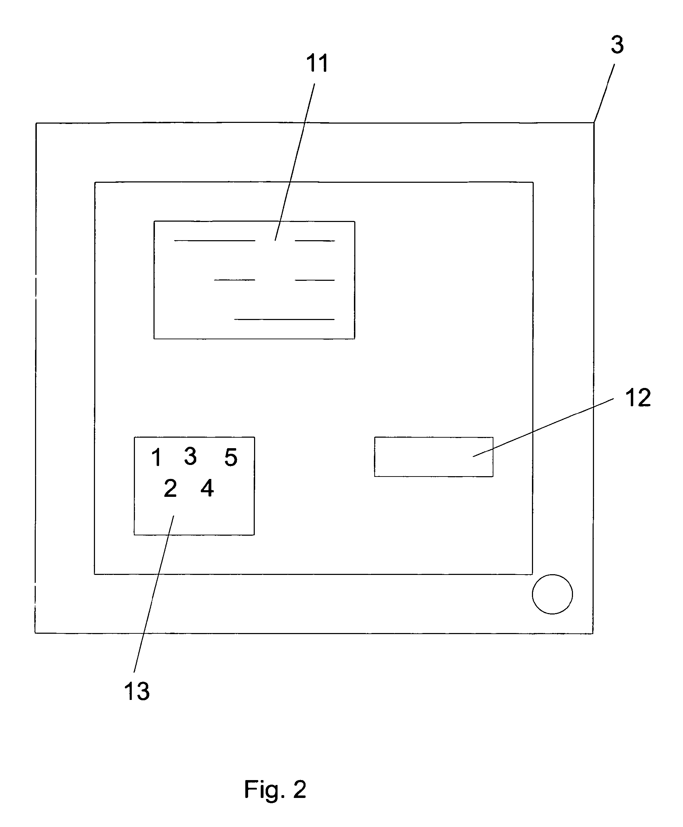

Fig. 2 shows an example of a screen which may be displayed during processing of an online order in a computer network. The components shown on the screen of the monitor 3 in Fig. 2 may be displayed at the same time or consecutively.

According to the embodiment shown in Fig. 2, three components are displayed on the screen of the monitor 3. The first component may be a order sheet 11, in which the client may fill in the order data. Component may be an input field 12 in which the user may type the transaction number provided by the bank. And component is a CAPTCHA message 13 which has to be retyped by the user to show that a human being is processing the order.

During typing of the different information, i.e. typing of the order data 11, the transaction number 12 and the CAPTCHA message 13, the data regarding operation of the keys of the keyboard are recorded and corresponding raw keystroke data with respect to the typing behaviour are obtained. The raw data may be processed to produce characteristic parameters for the typing behaviour of the client. For example, the average holding time of keys, the change over time from releasing one key to pressing the next key, typing frequency, stroke frequency etc. may be calculated.

The raw data or calculated characteristic features or parameters or both may be used to form part of the confirmation data sent to the server of the bank for confirmation of the order.

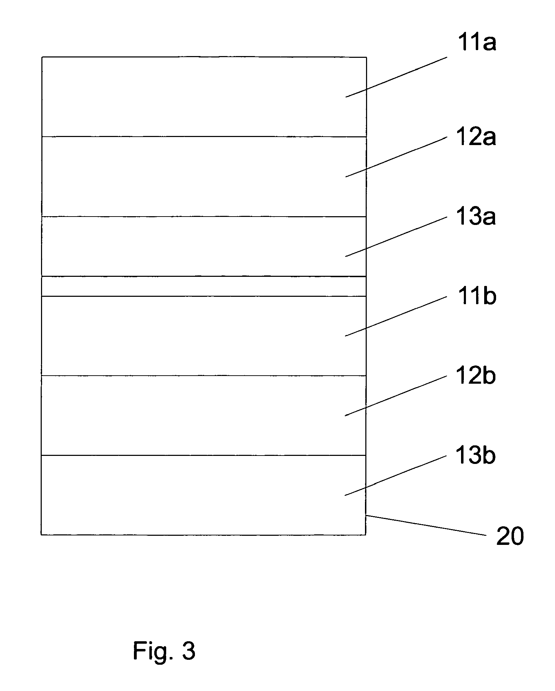

This is shown in Fig. 3 by schematic representation of the confirmation data block 20. The confirmation data block 20 comprises input confirmation data, for example the transaction number 12a, the CAPTCHA message 13a etc. Moreover, the confirmation data according to the present invention comprise key stroke dynamics data 11b to 13 b which have been recorded during input of the input confirmation data or processed from this data. For example part 11b of the confirmation data block 20 may be the raw data of the typing of the order while the data part 12b may be a characteristic parameter derived from typing of the transaction number and while data part 13b may comprise key stroke dynamic data based on typing of the CAPTCHA message 13.

Especially in the case, when the key stroke dynamics data are based on order data, the present invention may avoid so-called man-in-the-middle-attacks, since the wire transfer data cannot be easily exchanged without changing the key stroke dynamic data, especially when key specific features or parameters are used.

Although, the present invention has been described in detail with respect to specific embodiments, it is evident that the present invention is not limited to those embodiments, but is only defined by the scope of the attached claims. Accordingly, the described embodiments may be altered by using different combinations of the single features or by omitting single features. The present invention includes all combinations of features disclosed herein.

## Claims

1. Method for secure confirmation of an order sent by electronic communication between remote computers, with the method comprising:
establishing a data connection for transferring data between at least two computers,
transferring data comprising an order between the computers,
confirming the order by sending confirmation data, wherein the confirmation data comprise information on the keystroke dynamics measured during inputting of at least one of the order and the confirmation data.

2. Method according to claim 1,
wherein
the confirmation data comprise input confirmation data selected from at least one of the group comprising predefined text, predefined string, user-defined arbitrary string, user-defined arbitrary text, from the connected computer re-sent text, from the connected computer re-sent string, transaction numbers (TAN), indexed transaction numbers (iTAN), mobile transaction numbers (mTAN), individually generated transaction numbers, CAPTCHA messages (CAPTCHA Completely Automated Public Turing test to tell Computers and Humans Apart) sent by the connected computer.

3. Method according to claim 1 or 2,
wherein the keystroke dynamics data comprise at least one of raw input data and processed keystroke dynamics data.

4. Method according to any of the previous claims,
wherein from the raw input data at least one characteristic feature is determined out of the group comprising holding time of a key, change-over time from releasing one key and pressing the next key, change-over time from releasing one key to releasing the next key, change-over time from pressing one key to pressing the next key, fault frequency, fault occurrence, typing frequency, stroke frequency, single overrunning, multiple overrunning, frequency of use of specific keys, selection of alternative keys, selection of left and right shift key, anomalies with respect to time, anomalies with respect to specific keys, position related features, combinations thereof and statistic parameters.

5. Method according to any of the previous claims,
wherein transferring of the order and of the confirmation data is executed at the same time or consecutively.

6. Method according to any of the previous claims,
wherein the method comprises transferring of identification or authentication data.

7. Method according to claim 6,
wherein the keystroke dynamics data comprise information on the keystroke dynamics measured during inputting of identification or authentication data.

8. Computer program product comprising at least a module which carries out the method according to at least one of the preceding claims when executed at a computer.
